## Europäisches Patentamt
## European Patent Office
## Office européen des brevets

(19)

(11) Veröffentlichungsnummer : **0 167 938**
**B1**

(12)

# EUROPÄISCHE PATENTSCHRIFT

(45) Veröffentlichungstag der Patentschrift :
30.09.87

(51) Int. Cl.⁴ : **F 28 D 19/04, F 28 F 21/06**

(21) Anmeldenummer : 85107966.5

(22) Anmeldetag : 27.06.85

(54) Wärmetauscherkörper aus Kunststoff.

(30) Priorität : 04.07.84 DE 8419977 U
04.10.84 DE 8429157 U

(43) Veröffentlichungstag der Anmeldung :
15.01.86 Patentblatt 86/03

(45) Bekanntmachung des Hinweises auf die Patenterteilung : 30.09.87 Patentblatt 87/40

(84) Benannte Vertragsstaaten :
AT BE CH DE FR GB IT LI NL

(56) Entgegenhaltungen :
WO-A-83 /029 97
CA-A- 1 153 361
DE-A- 1 501 548
DE-A- 1 552 065
DE-A- 2 452 986
DE-A- 3 137 296
FR-A- 2 469 684
FR-A- 2 512 035
GB-A-   229 242
GB-A-   886 194
GB-A- 1 093 589

(73) Patentinhaber : Röhm GmbH
Kirschenallee Postfach 4242
D-6100 Darmstadt 1 (DE)

(72) Erfinder : Schikowsky, Hartmut
Karlstrasse 1
D-6100 Darmstadt (DE)
Erfinder : Gross, Heinz, Dr.-Ing.
Am Erlenbusch 2
D-6109 Mühltal (DE)
Erfinder : Helm, Herbert
Heinrichstrasse 3
D-6108 Weiterstadt (DE)
Erfinder : Pöhlmann, Klaus Ernst
Silcherweg 9
D-6100 Darmstadt (DE)
Erfinder : Schanz, Karl-Heinrich
Fürthweg 9
D-6109 Mühltal (DE)
Erfinder : Vetter, Heinz, Dr.-Ing.
Taunusstrasse 92
D-6101 Rossdorf 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Wärmetauscher- bzw. Wärmespeicherkörper zur Verwendung nach dem Rekuperator- oder Regeneratorprinzip. Beim Rekuperatorprinzip findet der Wärmetausch zwischen zwei gleichzeitig durch getrennte Kanäle strömenden Medien von unterschiedlicher Temperatur statt. Beim Regeneratorpinzip werden alle Kanäle abwechselnd von einem heißen und einem kälteren Medium durchströmt, wobei das letztere die in dem Wärmetauscher- bzw. Wärmespeicherkörper aufgenommene Wärme aufnimmt. Das letztgenannte Prinzip ist das bevorzugte Anwendungsgebiet der neuen Wärmetauscherkörper.

Die Erfindung betrifft nur die Austausch- oder Speicherkörper, von denen in einem Wärmetauscher gegebenenfalls eine Mehrzahl angeordnet ist, die je nach Anwendung mit Zu- und Abführleitungen ausgerüstet sein können. Bei der Verwendung als Regenerator sind derartige Leitungen meist nicht erforderlich.

Für Kühltürme und ähnliche Wärmetauscheranlagen mit hoher Leistung werden Wärmetauscher mit sehr großen Wärmetausch- bzw. -speicherflächen benötigt. Für den wirtschaftlichen Betrieb solcher Wärmetauschanlagen ist die Bereitstellung billiger, in großer Zahl neben- und hintereinander schaltbarer Wärmetauscherkörper von entscheidender Bedeutung. Es sind zahlreiche Versuche unternommen worden, aus Kunststoff extrudierte Profile, die sich billig herstellen lassen, zu Wärmetauscherkörpern zusammenzustapeln. So wird in der DE-A-27 51 115 unter vielen anderen Gestaltungen vorgeschlagen, extrudierte Hohlkammerplatten aus Kunststoff, die zwei ebene glatte Außenwände und einstückig dazwischen angeordnete Stege enthalten, mittels eines auf die Außenwände aufgebrachten Klebstoffes zu einem Stapel zu verbinden. Für eine Massenfertigung ist dieses Verbindungsverfahren jedoch zu teuer.

Eine gleichartige Bauweise findet sich bei dem Plattenwärmetauscher gemäß DE-A 31 37 296, bei dem eine Vielzahl von Hohlkammerplatten durch Klebverbindungen vollflächig fest miteinander verbunden sind. Gemäß DE-A 24 52 986 wird eine Mehrzahl von Hohlkammerplatten durch zwischen den Stirnseiten eingeklebte Dichtungsstreifen mit Abstand von einander zu einem Stapel verklebt. Dabei entsteht ein Kreuzstromwärmetauscher, in dem das eine Medium durch die Hohlkammern der Platten und das andere Medium durch die Abstandsräume zwischen je zwei Hohlkammerplatten strömt.

Der Erfindung liegt die Aufgabe zugrunde, Wärmetauscher aus einem Stapel von Hohlkammerplatten so aufzubauen, daß sie sich noch einfacher und kostengünstiger als die bisher bekannten Gestaltungen herstellen lassen.

Die Erfindung weist einen Weg zu besonders leicht und kostengünstig herstellbaren Wärmetauscher- bzw. Wärmespeicherkörpern. Eine zweckmäßige Gestaltung der Neuerung ist in den Figuren 1 bis 8 dargestellt.

Figur 1 zeigt einen Schnitt durch einen Wärmetauscherkörper in der Verbindungsebene zweier Hohlkammerplatten.

Figur 2 zeigt die Stirnfläche des in Figur 1 dargestellten Körpers.

Figur 3 zeigt die Stirnfläche einer einzelnen Platte.

Figur 4 zeigt in vergrößerter Darstellung einen Ausschnitt aus der in Figur 2 gezeigten Stirnfläche.

Figur 5 zeigt einen Schnitt durch eine weitere Ausführungsform der Erfindung in der Verbindungsebene zweier Hohlkammerplatten.

Figur 6 zeigt die Stirnfläche des in Figur 5 dargestellten Körpers.

Figuren 7 und 8 zeigen weitere Varianten der in Figur 5 dargestellten Ausführungsform.

Die Erfindung beruht auf der Erkenntnis, daß eine Verbindung der Hohlkammerplatten zu einem Stapel wesentlich einfacher und billiger herzustellen ist, wenn die Hohlkammerplatten nur im Bereich der Stirnflächen mit den benachbarten Hohlkammerplatten verbunden werden, als wenn eine vollflächige Verklebung der Wandflächen durchgeführt wird. Trotzdem hat ein auf diese Art verbundener Wärmetauscherkörper keine technischen Nachteile, ist aber im Betrieb zuverlässiger und in der Montage und Wartung günstiger als ein nur durch äußere Spannmittel zusammengehaltener Plattenstapel.

Da die Hohlkammerplatten 1 ebene glatte Außenwände 2, 3 haben, läßt sich eine Mehrzahl von ihnen zu einem Stapel 4 zusammenlegen, worin sich die Außenwände benachbarter Platten vollflächig berühren. Diese Berührung gewährleistet einen ausreichenden Wärmeübergang, wenn der Plattenstapel nach dem Rekuperatorprinzip gleichzeitig von zwei verschiedenen Medien durchströmt wird. Der Anschluß der Zu- und Abführungsleitungen kann in diesem Falle dadurch erleichtert werden, daß man die Richtung der Hohlkammern in aufeinanderfolgenden Platten des Stapels jeweils im rechten Winkel zueinander anordnet. Auf die Seitenflächen des Plattenstapels können Sammelkappen aufgesetzt werden, wobei die Zu- und Abführungsleitungen für jedes der beiden Medien an gegenüberliegenden Seitenflächen angeschlossen werden.

Bei Wärmetauschern nach dem Regeneratorprinzip spielt der Wärmeübergang zwischen den einzelnen Hohlkammern keine Rolle, da alle Kanäle vom gleichen Medium durchströmt werden. In diesem Falle ist es zweckmäßig, wenn die Hohlkammern in allen Platten eines Stapels parallel zueinander verlaufen.

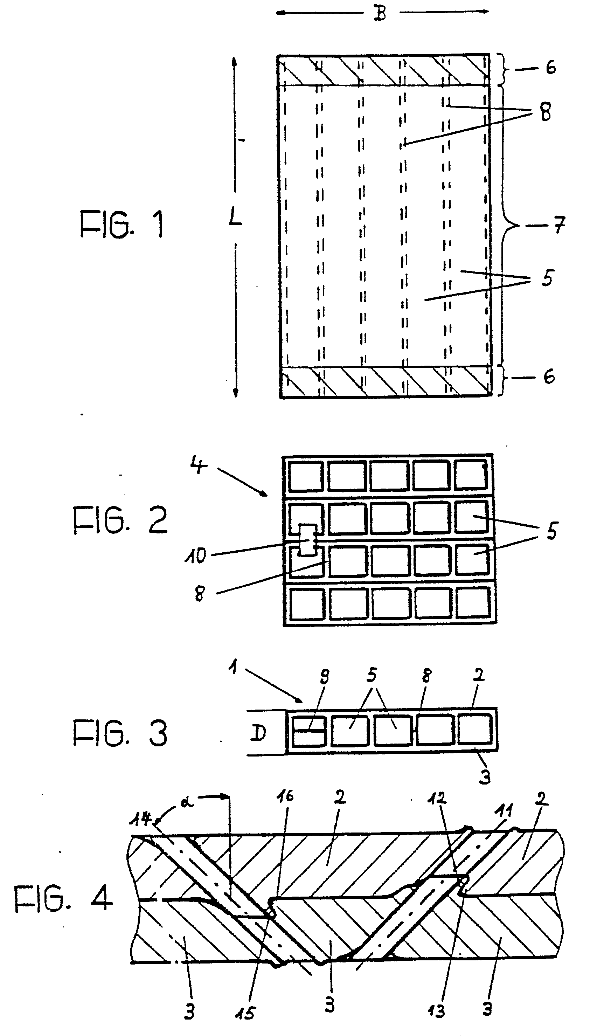

Der Plattenstapel besteht in der Regel aus mehr als 2, vorzugsweise aus 5 bis 100 miteinander verbundenen Einzelplatten 3. Diese sind erfindungsgemäß im Bereich der Stirnflächen miteinander verbunden. Die Stirnflächen sind die in Figur 2 für den Stapel und in Figur 3 für die Einzelplatte dargestellten Flächen, in denen die Hohlkammern 5 münden. Die Verbindung kann in einem schmalen Bereich 6 der Außenwände, der in Figur 1 schraffiert dargestellt ist, hergestellt sein, aber gegebenenfalls auch auf die Stirnflächen selbst beschränkt sein. In der Regel ist es ausreichend, wenn nur im Bereich der Stirnflächen eine Verbindung besteht und in dem ganzen dazwischenliegenden Bereich 7 die Außenwände der Hohlkammerplatten ohne Verbindung in Berührung stehen. Eine oder mehrere zusätzliche Verbindungszonen im Bereich 7 können in manchen Fällen zweckmäßig sein.

Die einzelnen Hohlkammerplatten sind durch Extrusion aus thermoplastischem Kunststoff hergestellt. Der Kunststoff muß gegenüber den durchströmenden Medien beständig sein und eine oberhalb der höchsten Betriebstemperatur liegende Erweichungstemperatur haben. Soweit diese Voraussetzungen erfüllt sind, können alle extrudierbaren Kunststoffe angewendet werden, wie z. B. Polyäthylen, Polypropylen, Polystyrol, Polyvinylchlorid oder Polymethylmethacrylat. Für Betriebstemperaturen über 100 bis etwa 120 °C sind Polycarbonat- und Polysulfon-Kunststoffe brauchbar. Für Betriebstemperaturen bis 150 °C können z. B. Polyphenylenoxide, Polyätherimide oder Polyäthersulfone verwendet werden. Der thermoplastische Kunststoff kann eingelagerte Teilchen mit einer höheren Wärmekapazität enthalten, beispielsweise Ruß oder Metallpartikel.

Zweckmäßige Abmessungen der Hohlkammerplatten sind eine Länge L von 500 bis 3 000 mm, eine Breite B von 300 bis 2 000 mm und eine Dicke D von 3 bis 30 mm, jedoch sind diese Abmessungen nicht kritisch. Die Außenwände 2, 3 und Stege 8 können entsprechend den statischen Anforderungen bei der Betriebstemperatur eine — meistens etwa gleiche — Dicke von 0,5 bis 5 mm haben. Die Hohlkammern 5 werden durch die Stege 8 und die dazwischenliegenden Abschnitte der Außenwände 2,3 begrenzt. Die Stege können senkrecht zu den Außenwänden oder schräg dazu stehen. Die Hohlkammern können auch durch Zwischenwände 9 unterteilt sein. Der Wärmeübergang zwischen dem strömenden Medium und der Hohlkammerplatte wird verbessert, wenn das Medium turbulent strömt.

Das kann beispielsweise durch Wellung der Stege in Längsrichtung erreicht werden. Verfahren zur Herstellung von Hohlkammerplatten mit gewellten Stegen sind bekannt.

Die Verbindung im Bereich der Stirnflächen kann durch Verschweißen erzeugt werden. Dazu läßt man beispielsweise ein beheiztes Werkzeug von den Stirnseiten her in die Hohlkammern eintauchen und preßt die Außenwände benachbarter Platten nach dem Aufschmelzen aneinander. Allerdings sind manche Kunststoffe schwer oder gar nicht schweißbar. In diesem Falle können die Hohlkammerplatten im Bereich 6 verklebt oder, wenn auch dies nicht gelingt, mechanisch verbunden werden. Dazu können Klammerelemente 10 verwendet werden, die jeweils über zwei aneinanderliegende Außenwandabschnitte greifen. Die Klammerelemente können aus Metall oder einem geeigneten Kunststoff bestehen und im letztgenannten Fall an Ort und Stelle durch Spritzguß erzeugt werden.

Eine bevorzugte Art der Verbindung von nicht schweißbaren Kunststoffen ist die formschlüssige Verzahnung. Zu diesem Zweck werden die Außenflächen im Bereich der Stirnflächen in der Weise umgeformt, daß sie eine Folge von Erhebungen und Vertiefungen aufweisen, die formschlüssig ineinandergreifen. Zweckmäßig werden die formschlüssig ineinandergreifenden Elemente mit Hinterschneidungen versehen, die eine Trennung senkrecht zur Plattenebene verhindern.

Ein einfaches, aber sehr wirksames Verbindungsverfahren besteht darin, ein über die Schmelztemperatur des Kunststoffes erhitztes Werkzeug in einer Eindringtiefe von 1 bis 5 mm schräg über die Stirnflächen des aufgeschichteten Plattenstapels hinwegzuführen, wobei es eine in die Stirnfläche eingesenkte Nut 11 hinterläßt. An den Berührungsflächen zweier Außenwände 2,3 zieht das Werkzeug eine Nase 12 aus dem Material der einen Wand 3 in die andere Wand 2 hinein. Durch die Schräglage der Nut 11 bildet die Nase mit dem angrenzenden Material 13 eine Hinterschneidung. Wenn mehrere Nuten 11, 14 in der gleichen Stirnfläche in gegenläufiger Schräglage angeordnet sind, wirken die Hinterschneidungen 12/13 und 15/16 in der Weise zusammen, daß sie die Trennung der Platten wirksam verhindern. Die Tiefe der Hinterschneidung nimmt mit dem Winkel α der Schräglage zu ; der Winkel α sollte wenigstens 30° und vorzugsweise 40 bis 60° betragen. Die Breite der Nuten ist nicht wesentlich und wird durch die Dicke des Werkzeugs bestimmt. Sie kann etwa 1 bis 5 mm betragen.

Als Werkzeug eignet sich beispielsweise ein beheizter, zur Stirnfläche senkrecht stehender Zylinder, der mit einer mechanischen Bewegungsvorrichtung in einer Zickzackbahn über alle Berührungslinien benachbarter Hohlkammerplatten des ganzen Stapels hinweggeführt wird. Der Abstand zwischen zwei Nutem soll nicht mehr als 500 mm betragen und liegt vorzugsweise bei 5 bis 100 nm.

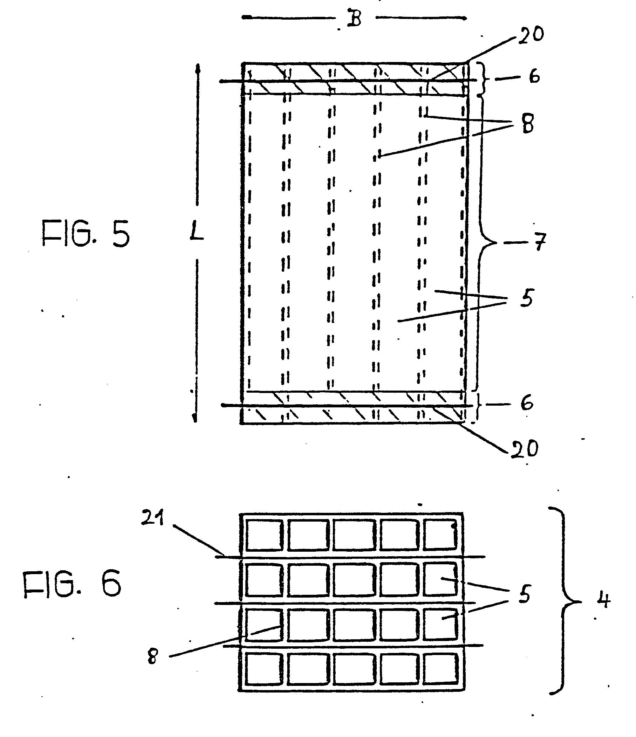

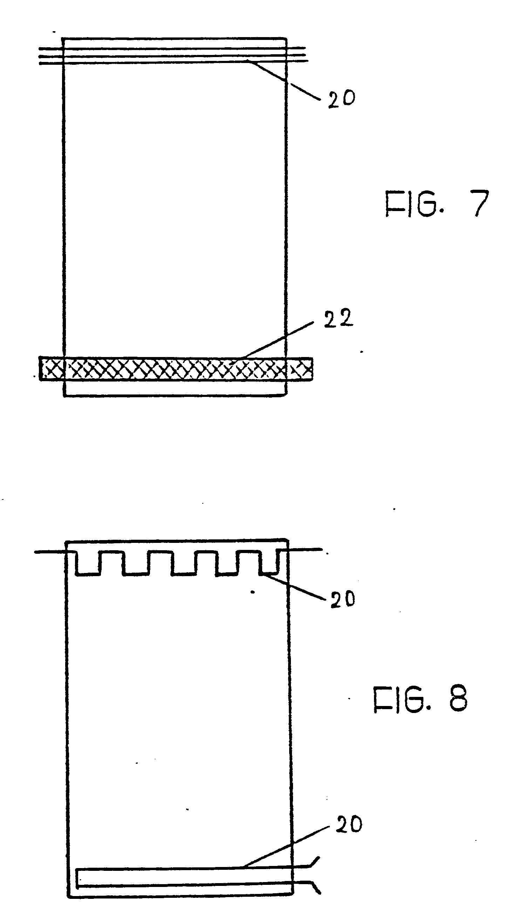

Bei den Ausführungsformen gemäß den Figuren 5 bis 8 wird die Verbindung im Bereich der Stirnflächen durch Verschweißen mittels Heizbändern 20 bewirkt. Die Heizänder werden beim Zusammenfügen des Plattenstapels nahe den Stirnseiten parallel zu diesen zwischen je zwei zu verbindende Platten gelegt. Die Enden 21 jedes Heizbandes ragen aus der Plattenstapel so weit heraus, daß eine Spannungsquelle ausgeschlossen werden kann. Nach dem Verschweißen können die herausragenden Enden abgeschnitten werden. Ein geradlinig verlegtes Heizband an jeder Stirnseite ist ausreichend. Jedoch kann man bei Bedarf auch eine breitere Verschweißungszone bilden, wenn mehrere Heizbänder nebeneinander verlegt oder ein oder mehrere Heizbänder wellen- oder schleifenförmig verlegt werden, wie in der Figuren 4 und 5 dargestellt.

Bis zum Verschweißen wird der Plattenstapel mit den zwischengefügten Heizbändern mit geeigneten Hilfsmitteln unter Druck zusammengehalten. Dann wird jeweils an die Enden der Heizbänder eine elektrische Spannung gelegt, welche eine Erwärmung der anliegenden Kunststoffzonen bis in dem Schmelzbereich des Kunststoffes bewirkt. Unter Druck verschweißen die erhitzten Zonen in der Umgebung eines Heizbandes miteinander. Sobald dieser Zustand erreicht ist, was in der Regel nach 1 bis 20 sec der Fall ist, nimmt man die Spannung von den Heizbändern ab und läßt die Schweißstelle erkalten.

Die in einem Plattenstapel verlegten Heizbänder können alle gleichzeitig oder einzeln oder gruppenweise durch Anlegen einer Spannung erhitzt werden. Sie verbleiben in dem verschweißten Wärmetauscher- bzw. Wärmespeicherkörper. Die elektrische Spannung wird so hoch gewählt, daß das Heizband rasch eine Temperatur im Schmelzbereich des Kunststoffes erreicht. Es genügt, die Schmelztemperatur nur wenig, z. B. 5-20 °C, zu überschreiten. Wird die Schmelztemperatur überschritten, kann es zu thermischen Zersetzungserscheinungen, Blasenbildung oder Spannungsrissen in dem Kunststoff kommen.

Die zum Erhitzen der Heizbänder erforderliche Spannung hängt vom Widerstand und der Länge der Heizbänder ab und wird zweckmäßig mit einem geeigneten Regler auf einen empirisch ermittelten Wert eingestellt. Als Heizbänder eignen sich z. B. 0,1 bis 2 mm dicke Drähte oder 2 bis 20 mm breite und 0,1 bis 1 mm dicke Flachbänder 22, die vorzugsweise aus einem Geflecht einzelner Widerstandsdrähte bestehen. Die Heizbänder können aber auch aus anderen leitfähigen Substanzen wie Lacken oder Pasten bestehen.

Übliche Betriebsspannungen liegen im Bereich von 5 bis 80 Volt Wechsel- oder Gleichspannung. Wenn die Hohlkammerplatten beim Verschweißen zur Bildung von Spannungsrissen neigen, kann es vorteilhaft sein, die Spannung in einem längeren Zeitraum allmählich auf den erforderlichen Höchstwert zu steigern und nach dem Verschweißen allmählich abzusenken. Dadurch lassen sich krasse Temperaturunterschiede auf engem Raum vermeiden.

**Patentansprüche**

1. Wärmetauscher- bzw. Wärmespeicherkörper aus Kunststoff, bestehend aus einem Stapel von extrudierten Hohlkammerplatten mit ebenen glatten Außenwänden (2, 3) und Stegen (8), die die Außenwände einstückig verbinden und zwischen denen sich die Hohlkammern (5) für die Wärmetauschmedien befinden, wobei die Hohlkammerplatten mit ihren Außenwänden vollflächig aufeinander liegen und miteinander verbunden sind, dadurch gekennzeichnet, daß die Hohlkammerplatten im Bereich der Stirnseiten mit den im Stapel benachbarten Hohlkammerplatten verbunden und wenigstens in einem Teil des dazwischenliegenden Bereichs nicht verbunden sind.

2. Wärmetauscher- bzw. Wärmespeicherkörper nach Anspruch 1, dadurch gekennzeichnet, daß die Hohlkammerplatten nur im Bereich der Stirnseiten untereinander verbunden sind.

3. Wärmetauscher- bzw. Wärmespeicherkörper nach den Ansprüchen 1 oder 2, dadurch gekennzeichnet, daß die Hohlkammerplatten in dem ganzen Bereich zwischenden stirnseitigen Verbindungen nicht verbunden sind.

4. Wärmetauscher- bzw. Wärmespeicherkörper nach den Ansprüchen 1 oder 2, dadurch gekennzeichnet, daß die Hohlkammerplatten im Bereich der Stirnseiten miteinander verklebt sind.

5. Wärmetauscher- bzw. Wärmespeicherkörper nach den Ansprüchen 1 oder 2, dadurch gekennzeichnet, daß die Hohlkammerplatten im Bereich der Stirnseiten durch Klammerelemente verbunden sind.

6. Wärmetauscher- bzw. Wärmespeicherkörper nach den Ansprüchen 1 oder 2, dadurch gekennzeichnet, daß die Hohlkammerplatten im Bereich der Stirnseiten formschlüssig miteinander verzahnt sind.

7. Wärmetauscher- bzw. Wärmespeicherkörper nach Anspruch 6, dadurch gekennzeichnet, daß die Hohlkammerplatten mit Hinterschneidungen miteinander verzahnt sind.

8. Wärmetauscher- bzw. Wärmespeicherkörper nach Anspruch 7, dadurch gekennzeichnet, daß die Hinterschneidungen neben einer schräg zu der Berührungslinie der miteinander verbundenen Hohlkammerplatten verlaufenden, in die Stirnseiten eingesenkten Nut angeordnet sind.

9. Wärmetauscher- bzw. Wärmespeicherkörper nach Anspruch 8, dadurch gekennzeichnet, daß mehrere Nuten gegenläufig schräg in den Stirnseiten angeordnet sind.

10. Wärmetauscher- bzw. Wärmespeicherkörper nach den Ansprüchen 1 bis 9, dadurch gekennzeichnet, daß die Hohlkammern in allen Hohlkammerplatten parallel zueinander verlaufen.

11. Wärmetauscher- bzw. Wärmespeicherkörper nach den Ansprüchen 1 bis 10, dadurch gekennzeichnet, daß die Stege der Hohlkammern in Längsrichtung gewellt sind.

12. Wärmetauscher- bzw. Wärmespeicherkörper nach den Ansprüchen 5 bis 9, dadurch gekennzeichnet, daß sie aus einem nicht oder schwer verschweißbaren Kunststoff bestehen.

13. Wärmetauscher- bzw. Wärmespeicherkörper nach Anspruch 12, bestehend aus Polyphenylenoxid, Polyätherimid oder Polyäthersulfon.

14. Wärmetauscher- bzw. Wärmespeicherkörper nach den Ansprüchen 1 bis 13, bestehend aus einem thermoplastischen Kunststoff mit eingelagerten Teilchen aus einem Werkstoff mit höherer Wärmekapazität.

15. Wärmetauscher- bzw. Wärmespeicherkörper nach den Ansprüchen 1 bis 3, 10 und 11, dadurch gekennzeichnet, daß innerhalb jedes verschweißten Bereichs ein Heizband verläuft, das durch Anlegen einer elektrischen Spannung auf eine Temperatur im Schmelzbereich des Kunststoffes erhitzt werden kann.

## Claims

1. Heat-exchanger or heat-store body of plastic, consisting of a stack of extruded hollow-chamber plates with smooth flat outer walls (2, 3) and webs (8) with integrally join the outer walls and between which the hollow chambers (5) for the heat-exchange media are located, with the entire surfaces of the outer walls of the hollow-chamber plates lying one on top of the other and being connected to one another, characterised in that the hollow-chamber plates are connected in the region of the end-faces to the hollow-chamber plates ajoining in the stack and are not connected in at least a part of the intervening region.

2. Heat-exchanger or heat-store body according to claim 1, characterised in that the hollow-chamber plates are usually connected only in the region of the end-faces.

3. Heat-exchanger or heat-store body according to claim 1 or 2, characterised in that the hollow-chamber plates are not connected in the entire region between the end-face connections.

4. Heat-exchanger or heat-store body according to claim 1 or 2, characterised in that the hollow-chamber plates are mutually bonded adhesively in the region of the end-faces.

5. Heat-exchanger or heat-store body according to claim 1 or 2, characterised in that the hollow-chamber plates are connected in the region of the end-faces by means of clamp elements.

6. Heat-exchanger or heat-store body according to claim 1 or 2, characterised in that the hollow-chamber plates are mutually interlocked positively in the region of the end-faces.

7. Heat-exchanger or heat-store body according to claim 6, characterised in that the hollow-chamber plates are mutually interlocked by means or undercuts.

8. Heat-exchanger or heat-store body according to claim 7, characterised int hat the undercuts are arranged next to a groove which runs at an angle to the contact line of the mutually connected hollow-chamber plates and is sunk into the end-faces.

9. Heat-exchanger or heat-store body according to claim 8, characterised in that several grooves running in opposite directions are arranged at an angle in the end-faces.

10. Heat-exchanger or heat-store body according to claims 1 to 9, characterised in that the hollow chambers in all the hollow-chamber plates run parallel to each other.

11. Heat-exchanger or heat-store body according to claims 1 to 10, characterised in that the webs of the hollow chambers are corrugated in the longitudinal direction.

12. Heat-exchanger or heat-store body according to claims 5 to 9, characterised in that they consist of a plastic which is difficult to weld or cannot be welded at all.

13. Heat-exchanger or heat-store body according to claim 12, consisting of polyphenylene oxide, polyetherimide or polyethersulfone.

14. Heat-exchanger or heat-store body according to claims 1 to 13, consisting of a thermoplastic with incorporated particles of higher heat capacity.

15. Heat-exchanger or heat-store body according to claims 1 to 3, 10 and 11, characterised in that a strip heater, which can be heated by applying an electric voltage to a temperature in the melting range of the plastic, extends within each welded region.

## Revendications

1. Corps échangeur de chaleur ou accumulateur de chaleur en matière plastique, constitué par une pile de plaques à chambres creuses extrudées, comportant des parois extérieures (2, 3) lisses et planes et des entretoises (8) qui relient d'une seule pièce ces parois extérieures et entre lesquelles se trouvent les chambres creuses (5) pour les fluides faisant l'objet de l'échange thermique, les plaques à chambres creuses étant superposées et assemblées entre elles par leurs parois extérieures sur toute la surface de celles-ci, caractérisé en ce que les plaques à chambres creuses sont unies, dans la région des côtés frontaux, aux plaques à chambres creuses contiguës dans la pile, mais ne sont pas unies à celles-ci dans une partie au moins de la région intermédiaire.

2. Corps échangeur de chaleur ou accumulateur de chaleur selon la revendication 1, caractérisé en ce que les plaques à chambres creuses ne sont unies entre elles que dans la région des côtés frontaux.

3. Corps échangeur de chaleur ou accumulateur de chaleur selon la revendication 1 ou 2, caractérisé en ce que les plaques à chambres creuses ne sont pas unies entre elles dans toute la région comprise entre les assemblages sur les côtés frontaux.

4. Corps échangeur de chaleur ou accumulateur de chaleur selon la revendication 1 ou 2, caractérisé en ce que les plaques à chambres creuses sont collées entre elles dans la région des côtés frontaux.

5. Corps échangeur de chaleur ou accumulateur de chaleur selon la revendication 1 ou 2, caractérisé en ce que les plaques à chambres creuses sont unies entre elles, dans la région des côtés frontaux, par des éléments d'agrafage.

6. Corps échangeur de chaleur ou accumulateur de chaleur selon la revendication 1 ou 2, caractérisé en ce que les plaques à chambres creuses sont unies entre elles par assemblage en adent dans la région des côtés frontaux.

7. Corps échangeur de chaleur ou accumulateur de chaleur selon la revendication 6, caractérisé en ce que les plaques à chambres creuses sont unies entre elles par assemblage en adent avec des contre-dépouilles.

8. Corps échangeur de chaleur ou accumulateur de chaleur selon la revendication 7, caractérisé en ce que les contre-dépouilles sont disposées à côté d'une rainure gravée dans les côtés frontaux, s'étendant obliquement par rapport à la ligne de contact des plaques à chambres creuses unies entre elles.

9. Corps échangeur de chaleur ou accumulateur de chaleur selon la revendication 8, caractérisé en ce que plusieurs rainures sont formées avec des obliquités inverses dans les côtés frontaux.

10. Corps échangeur de chaleur ou accumulateur de chaleur selon l'une quelconque des revendications 1 à 9, caractérisé en ce que les chambres creuses dans toutes les plaques à chambres creuses s'étendent parallèlement les unes aux autres.

11. Corps échangeur de chaleur ou accumulateur de chaleur selon l'une quelconque des revendications 1 à 10, caractérisé en ce que les entretoises des chambres creuses sont ondulées en direction longitudinale.

12. Corps échangeur de chaleur ou accumulateur de chaleur selon l'une quelconque des revendications 5 à 9, caractérisé en ce qu'il est fait d'une matière plastique qui n'est pas soudable ou ne l'est que difficilement.

13. Corps échangeur de chaleur ou accumulateur de chaleur selon la revendication 12, fait d'oxyde de polyphénylène, de polyéthérimide ou de polyéthersulfone.

14. Corps échangeur de chaleur ou accumulateur de chaleur selon l'une quelconque des revendications 1 à 13, fait d'une matière synthétique thermoplastique avec des particules incorporées en une matière à capacité calorifique élevée.

15. Corps échangeur de chaleur ou accumulateur de chaleur selon l'une quelconque des revendications 1 à 3, 10 ou 11, caractérisé en ce qu'il s'étend, à l'intérieur de chaque région soudée, un ruban chauffant qui peut être échauffé, par application d'une tension électrique, à une température se situant dans la gamme de fusion de la matière plastique.

FIG. 1

FIG. 2

FIG. 3

FIG. 4

FIG. 5

FIG. 6

FIG. 7

22

20

FIG. 8

20

20